(19) Europäisches Patentamt / European Patent Office / Office européen des brevets

(11) **EP 1 972 910 A2**

(12) **EUROPEAN PATENT APPLICATION**

(43) Date of publication:
    **24.09.2008 Bulletin 2008/39**

(51) Int Cl.:
    *G01J 1/42* (2006.01)    *G01J 1/44* (2006.01)

(21) Application number: **08250710.4**

(22) Date of filing: **01.03.2008**

(84) Designated Contracting States:
    **AT BE BG CH CY CZ DE DK EE ES FI FR GB GR
    HR HU IE IS IT LI LT LU LV MC MT NL NO PL PT
    RO SE SI SK TR**
    Designated Extension States:
    **AL BA MK RS**

(30) Priority: **09.03.2007 GB 0704548**

(71) Applicant: **Lasermet Limited
    Bournemouth
    Dorset
    BH8 8JX (GB)**

(72) Inventors:
    • **Hewinson, John
      Poole, Dorset BH17 7YQ (GB)**
    • **Tozer, Bryan Allen
      Bournemouth, Dorset BH8 8JX (GB)**
    • **Wells, David
      Crondall, Hampshire GU10 5QU (GB)**

(74) Representative: **Locke, Andrew Robert
    Barker Brettell LLP
    Medina Chambers
    Town Quay
    Southampton
    SO14 2AQ (GB)**

(54)    **An electronic detecting apparatus**

(57)    An electronic detecting apparatus is provided for detecting an output of an external device such as a light emitter. The apparatus comprises a detector (1) operative to detect a variable relating to the output of the external device, and control means operative to receive a detector signal from the detector (1) indicative of an initial non-steady state value of the detected variable. The control means is further operative to process the detector signal to generate a processed signal, the controller combining the detector signal and the processed signal to generate an output signal indicative of a future steady state value of the variable. The apparatus thus speeds up the time taken for the steady state value of the variable to be determined.

**FIGURE 1**

**Description**

The present invention relates to an electronic detecting apparatus and particularly but not exclusively relates to an electronic detecting apparatus for detecting the output of an external device such as a light emitting device for example.

It has previously been proposed, for example, to provide an electronic light power detecting apparatus comprising a detector that produces an output voltage or current which is proportional to the difference in temperature between one side of the detector and the other, one of the sides of the detector being impinged, in use, by light energy from the light source whose power is being measured. Such a detector may use the Peltier-Seebeck effect.

The output voltage typically rises in a relative slow fashion as the exposed side of the detector heats up, until a steady state is reached wherein the detector is in thermal equilibrium. A constant or varying temperature difference may exist across the detector.

The time taken for the detector to reach the steady state wherein the output voltage is indicative of the power of the light emitting device being detected is often therefore relatively long.

According to a first aspect of the invention there is provided an electronic detecting apparatus for detecting an output of an external device, the apparatus comprising a detector operative to detect a variable relating to the output of the external device, and control means operative to receive a detector signal from the detector indicative of an initial non-steady state value of the detected variable and further operative to process the detector signal to generate a processed signal, the control means combining the detector signal and the processed signal to generate an output signal indicative of a future steady state value of the variable.

Thus, when there is a change in the level of the output of the external device being detected, the output signal of the detecting apparatus is generated more quickly than the detector signal itself.

Preferably the control means is subsequently operative to process the output signal to generate a display control signal to control display means to indicate the output of the external device.

Preferably the display means comprises part of the electronic measuring apparatus.

Preferably the control means comprises differentiating means operative to generate the processed signal, the processed signal being proportional to the rate of change of the variable of the external device detected by the detector of the detecting apparatus.

The control means may comprise electronic circuitry.

The differentiating means may comprise a differentiator sub-circuit comprising a resistor and a first operational amplifier connected in parallel, an input to the first operational amplifier being an output from the detector.

Preferably gain adjustment means is provided to enable the apparatus to be adjusted in order to be able to detect a range of amplitudes of variable of the external device

Preferably combining means is provided to combine the detector output and the processed output from the differentiating means.

The combining means may comprise response speed adjustment means operative to adjust the response speed of the combining means in order to achieve a desired balance between speed and accuracy of response.

The combining means may comprise electronic circuitry comprising a second operational amplifier, a first input to the second operational amplifier being the output from the detector, a second input to the second operational amplifier being the output from the differentiator sub-circuit.

Preferably signal compensation means are provided operative to generate a compensation signal to adjust the output signal to compensate for errors in the detector output.

Preferably the signal compensation means comprises a signal compensation sub-circuit comprising a capacitor and a resistor connected in series with the first input of the first operational amplifier.

Preferably the electronic circuitry comprises a preamplifier operative to amplify the output of the detector.

The apparatus may comprise a light power detecting apparatus. The apparatus may comprise a laser power detecting apparatus.

The detector may comprise a Peltier-Seebeck detector, that is, a detector that produces, in use, an output voltage proportional to heat transfer across the detector.

According to a second aspect of the invention there is provided a light power detecting apparatus for detecting the power of a light emitting device, the apparatus comprising a Peltier-Seebeck detector operative to detect light emitted from the light emitting device, and control means operative to receive a detector signal from the Peltier-Seebeck detector indicative of an initial non-steady state value of the emitted light and further operative to process the detector signal to generate a processed signal, the control means combining the detector signal and the processed signal to generate an output signal indicative of a future steady state value of the power of the light emitting device.

Other aspects of the present invention may include any combination of the features or limitations referred to herein.

The present invention may be carried into practice in various ways, but embodiments will now be described by way of example only with reference to the accompanying drawings in which:

**Figure 1** is a circuit diagram of circuitry comprising part of control means of an apparatus in accordance with the present invention;

**Figures 2a to 2d** are graphs of voltage against time for various components of the circuitry of Figure 1;

**Figures 3a to 3e** are graphs of voltage against time for various further components of the circuitry of Figure 1; and

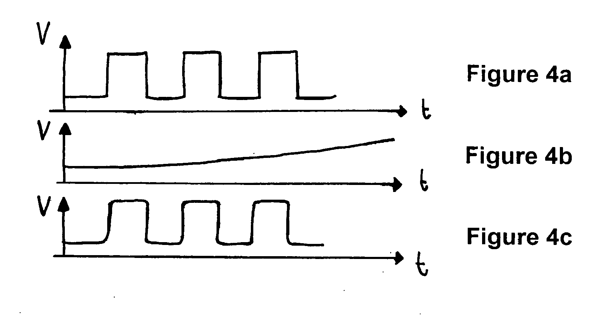

**Figures 4a to 4c** are further graphs of voltage against time for various components of the circuitry of Figure 1.

An electronic detecting apparatus, which in this example comprises a light power detecting apparatus, comprises a light detector, an output signal display, and a power source to power the detector and the display. Electronic control means are provided to receive and process a signal from the detector in order to generate an output signal to indicate on the display the power of an external light emitting device such as a laser for example.

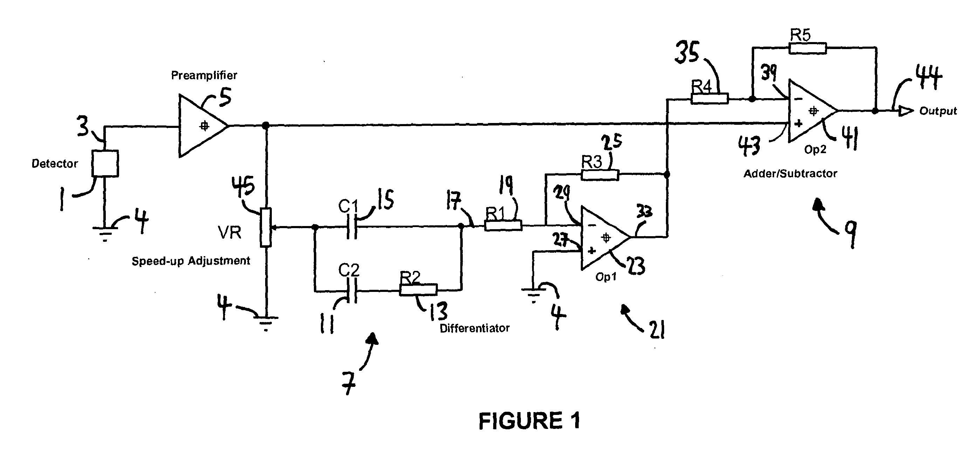

Referring to Figure 1 the detector in this example comprises a Peltier-Seebeck detector 1 operative to generate a detector voltage output 3 in proportion to the heat flow from one side of the Peltier-Seebeck detector 1 to the other, the heat flow being generated by light from a light emitting device being incident on one side of the detector 1. The Peltier-Seebeck detector 1 is connected to a steady state DC input 4 which may be earth.

The detector voltage output 3 is amplified by a preamplifier 5 before being input, via a parallel circuit connection, to compensation means comprising a compensation sub-circuit 7, and to combining means comprising an addition/subtraction sub-circuit 9.

The compensation sub-circuit 7 comprises a series capacitor 11 and resistor 13 that are connected in parallel with a second capacitor 15.

A voltage output 17 from the compensation sub-circuit 7 passes, via a further resistor 19, to differentiating means comprising a differentiator sub-circuit 21 comprising a first operational amplifier 23 and a resistor 25.

The first operational amplifier 23 comprises a first, non-inverting input 27 connected to earth 4, and a second, inverting input 29 connected in series to the compensation sub-circuit 7. The first operational amplifier 23 generates a processed output comprising a differential output voltage 33 that is an amplification of the difference between the voltage from the power source 4 and the voltage output 17 from the compensation sub-circuit 7.

The differential output voltage 33 is fed, via a resistor 35, to the addition/subtraction sub-circuit 9 and in particular to the inverted input 39 of a second operational amplifier 41. The non-inverted input 43 of the second operational amplifier 41 receives the amplified detector voltage output 3 from the preamplifier 5.

The addition/subtraction sub-circuit 9 is operative to combine the detector output 3 and the processed output 33 by subtracting the inverted differential voltage output 33 of the differentiator sub-circuit 21 from the original, non-inverted pre-amplified detector voltage output 3 to provide an output voltage signal 44 indicative of the predicted future steady state power of the light emitting device. The output voltage signal 44 is converted into a display output indicative of the power of the light emitting device being measured, for displaying on a display (not shown), such as an LCD or LED display, that may be integral with, or separate to, the electronic detecting apparatus.

The gain of the differentiator sub-circuit 21 can be adjusted using a variable resistor 45 to give an output voltage signal 44 indicative of the absolute instantaneous power of the light emitting device.

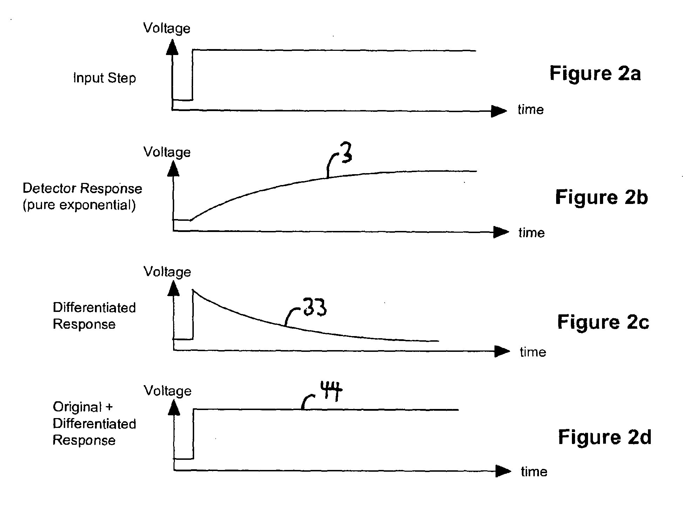

Referring additionally to Figure 2, graph a) indicates an example form of a light input to the detector 3 as output from an external device. Graph b) indicates the form of the output voltage 3 of the detector 1 in response to the light input and shows that the output voltage 3 of the detector 1 comprises an exponential response. Graph c) indicates the form of the differentiated voltage output 33 from the differentiator sub-circuit 21. Graph d) indicates the form of the output voltage signal 44, namely the combination of the amplified detector output voltage 3 and the differentiated output voltage 33.

An instantaneous change in input power as per the step input of graph 2a) causes the detector output voltage 3 (or amplified detector output voltage) to rise from an initial value $V_0$ to a final value $V_1$.

If the response of the detector 1 conforms to a single pole exponential response with time constant k the detector output voltage 3 (V) at time t after the input step is given by:

$$V = V_0 + (V_1 - V_0)(1 - e^{-t/k})$$

$$\text{or } V = V_1 - (V_1 - V_0)e^{-t/k}$$

The rate of change of the output voltage V over time, dV/dt, is given by:

$$dV/dt \; = \; (1/k) \; (V_1 - V_0) e^{-t/k}$$

If this is multiplied by a factor a (with dimensions of time) and added to the original output V, a summed output $V_s$ is produced:

$$V_s \; = \; V \; + \; a(dV/dt)$$
$$= \; V_1 \; - \; (V_1 - V_0) e^{-t/k} \; + \; (a/k)(V_1 - V_0) e^{-t/k}$$

Putting a = k gives Vs = V1, i.e. the summed output voltage value goes immediately to its final value to produce the output voltage signal 44.

As can be seen from a comparison of graphs b) and d), in use, the apparatus predicts the final steady state power of the light emitting device many times more quickly than the time that would be taken for the apparatus to reach steady state using only the detector voltage output 3 and thus more promptly provides an accurate indication to the user of the apparatus of the power of the light emitting device.

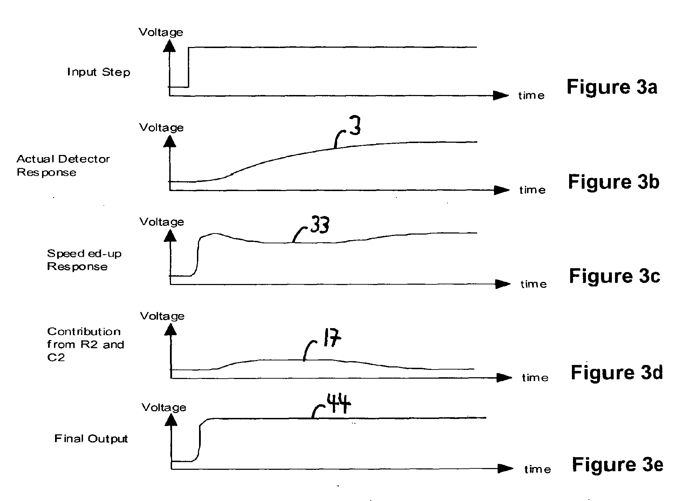

The above description assumes that the response of a Peltier-Seebeck detector to radiant light energy provides a simple, single pole exponential response. However, typically a Peltier-Seebeck detector does not exactly provide such a response. Referring to Figure 3, a more accurate detector output voltage 3 is shown in graph b) to a step light input as per graph a) where it can be seen that the initial output voltage 3 is not a pure exponential response. This can lead to the voltage output signal 44 of the apparatus, that is the combination of the amplified detector voltage output 3 and the differentiated voltage output 33 tending to fall for several seconds after reaching the correct amplitude, before returning to the correct amplitude. This problematic output response curve is shown in Figure 3c).

This problematic response is overcome by the compensation sub-circuit 7 comprising the series capacitor 11 and resistor 13. The compensation voltage output 17 from the compensation sub-circuit 7 can be seen with reference to graph 3d). The output voltage signal 44 of the apparatus is then a combination of the output 33 of the differentiator sub-circuit 21, which itself receives the output 17 from the compensation sub-circuit 7, and the amplified detector output voltage 3 of the detector 1 itself. This final output signal 44 can be seen with reference to graph 3e) and closely replicates the step input from the light emitting device, with the final steady state power of the light emitting device being determined in a relatively short time.

Graph 4a illustrates a pulsed output from an external device, with Graph 4b illustrating the normal, ie non speeded up detector output voltage 3. Graph 4c illustrates the final output signal 44 of the device 1.

The differentiating means and the integration means could comprise any suitable componentry including, for example, analogue electronic components such as operational amplifiers and/or electronic processing means such as for example micro processors.

Whilst the above described embodiment relates to a light power detecting apparatus comprising a Peltier-Seebeck detector, the apparatus could comprise any other type of detecting apparatus using any desired type of detector.

**Claims**

1. An electronic detecting apparatus for detecting an output of an external device, the apparatus comprising a detector (1) operative to detect a variable relating to the output of the external device, and control means operative to receive a detector signal from the detector (1) indicative of an initial non-steady state value of the detected variable and further operative to process the detector signal to generate a processed signal, the control means combining the detector signal and the processed signal to generate an output signal indicative of a future steady state value of the variable.

2. The electronic detecting apparatus of claim 1 in which the control means is subsequently operative to process the output signal to generate a display control signal to control display means to indicate the output of the external device.

3. The electronic detecting apparatus of claim 2 in which the display means comprises part of the electronic measuring apparatus.

**4.** The electronic detecting apparatus of any one of claims 1, 2, or 3 in which the control means comprises differentiating means (21) operative to generate the processed signal, the processed signal being proportional to the rate of change of the variable of the external device detected by the detector (1) of the detecting apparatus.

**5.** The electronic detecting apparatus of any one of the preceding claims in which the control means comprises electronic circuitry.

**6.** The electronic detecting apparatus of claim 4 or claim 5 in which the differentiating means (21) comprises a differentiator sub-circuit comprising a resistor (25) and a first operational amplifier (23) connected in parallel, an input to the first operational amplifier (23) being an output from the detector (1).

**7.** The electronic detecting apparatus of any one of the preceding claims in which gain adjustment means (45) is provided to enable the apparatus to be adjusted in order to be able to detect a range of amplitudes of variable of the external device.

**8.** The electronic detecting apparatus of any one of claims 4 to 7 in which combining means (9) is provided to combine the detector output and the processed output from the differentiating means (21).

**9.** The electronic detecting apparatus of claim 8 in which the combining means (9) comprises response speed adjustment means operative to adjust the response speed of the combining means in order to achieve a desired balance between speed and accuracy of response.

**10.** The electronic detecting apparatus of claim 8 or claim 9 in which the combining means (9) comprises electronic circuitry comprising a second operational amplifier (41), a first input to the second operational amplifier (41) being the output from the detector (1), a second input to the second operational amplifier (41) being the output (33) from the differentiator sub-circuit (21).

**11.** The electronic detecting apparatus of any one of the preceding claims in which signal compensation means (7) are provided operative to generate a compensation signal to adjust the output signal to compensate for errors in the detector output.

**12.** The electronic detecting apparatus of claim 11 in which the signal compensation means (7) comprises a signal compensation sub-circuit comprising a capacitor (11) and a resistor (13) connected in series with the first input of the first operational amplifier (23).

**13.** The electronic detecting apparatus of any one of claims 5 to 12 in which the electronic circuitry comprises a preamplifier (5) operative to amplify the output of the detector (1).

**14.** The electronic detecting apparatus of any one of the preceding claims in which the apparatus comprises a light power detecting apparatus.

**15.** The electronic detecting apparatus of one of claims 1 to 13 in which the apparatus comprises a laser power detecting apparatus.

**16.** The electronic detecting apparatus of any one of the preceding claims in which the detector (1) comprises a Peltier-Seebeck detector, that is, a detector that produces, in use, an output voltage proportional to heat transfer across the detector.

**17.** A light power detecting apparatus for detecting the power of a light emitting device, the apparatus comprising a Peltier-Seebeck detector (1) operative to detect light emitted from the light emitting device, and control means operative to receive a detector signal from the Peltier-Seebeck detector (1) indicative of an initial non-steady state value of the emitted light and further operative to process the detector signal to generate a processed signal, the control means combining the detector signal and the processed signal to generate an output signal indicative of a future steady state value of the power of the light emitting device.

**FIGURE 1**

EP 1 972 910 A2

Voltage

Input Step

**Figure 2a**

time

Voltage

Detector Response
(pure exponential)

3

**Figure 2b**

time

Voltage

Differentiated
Response

33

**Figure 2c**

time

Voltage

Original +
Differentiated
Response

44

**Figure 2d**

time

Input Step

Voltage

time

**Figure 3a**

Actual Detector
Response

Voltage

3

time

**Figure 3b**

Speed ed-up
Response

Voltage

33

time

**Figure 3c**

Contribution
from R2 and
C2

Voltage

17

time

**Figure 3d**

Final Output

Voltage

44

time

**Figure 3e**

Figure 4a

Figure 4b

Figure 4c